# DEMANDE DE BREVET EUROPEEN

(11) **EP 2 947 124 A1**
(43) Date de publication de la demande: **25.11.2015**
(21) Numéro de dépôt: 14171432.9
(22) Date de dépôt: 06.06.2014
(51) Int. Cl.: C09D 5/08, C09D 5/12, C23C 22/74, C04B 28/34, C09D 183/08, C08G 77/22, C23C 22/83, C09D 183/04

(54) **Composition liante, procédé de fabrication d'un revêtement de protection sacrificielle contre la corrosion mettant en oeuvre ladite composition et support revêtu d'un tel revêtement**

(30) Priorité: 23.05.2014 FR 1454706
(71) Demandeur: A ET A - Mader, 59000 Lille (FR)
(72) Inventeur: Pedoni, Emeline, 95150 TAVERNY (FR); Volovitch, Polina, 91120 PALAISEAU (FR); Ogle, Kevin, 78100 SAINT GERMAIN EN LAYE (FR)
(74) Mandataire: Balesta, Pierre

(57) **Abrégé**

La présente invention a pour objet une composition liante aqueuse pour la formation d'un revêtement de protection sacrificielle contre la corrosion, ladite composition étant exempte de chromates, et encore de préférence de borates et de molybdates. Avantageusement, ladite composition liante a un pH inférieur à 6 et comprend un liant, des particules d'au moins un oxyde métallique et au moins un phosphate métallique, ledit liant comprenant un oligomère d'organosilane hydrolysé. De plus, la proportion en poids desdites particules d'au moins un oxyde métallique par rapport au poids total de la masse sèche de ladite composition liante est supérieure ou égale à 75%.

## Description

La présente invention concerne les compositions liantes aqueuses destinées à former un revêtement de protection sacrificielle contre la corrosion sur au moins une portion de surface d'un support, en particulier exempt de composés cancérigènes, mutagènes ou reprotoxiques, également désignés sous l'abréviation de composés CMR.

### Arrière-plan de l'invention

La présente invention concerne également les procédés de fabrication et d'application de tels revêtements de protection sacrificielle, et les supports ainsi revêtus.

Les traitements de conversion conduisent à une modification superficielle du support métallique (alliages d'aluminium, de titane, de fer et d'autres métaux) par procédé d'anodisation (opération d'électrolyse, par exemple oxydation anodique chromique, sulfurique ou phosphorique) ou par simple procédé chimique de conversion (par exemple chromatation ou phosphatation).

La chromatation permet de former un dépôt mince très adhérent de chromates métalliques en mettant la surface de la pièce à traiter (typiquement alliages d'aluminium, de zinc ou d'aciers) au contact d'une solution acide à base de bichromates et d'activateurs fluorés. Ce traitement améliore la tenue à la corrosion du support et est également utilisée comme base d'accrochage des peintures.

Ces procédés ont cependant pour inconvénients d'utiliser des composés toxiques, s'agissant en particulier des eaux de traitement et de rinçage des solutions en excès des supports traités.

En outre, les eaux de rinçage et les solutions mises en oeuvre doivent être traitées pour éliminer les métaux lourds CMR dissous avant leur rejet ou leur réutilisation. L'élimination des métaux produit des déchets toxiques supplémentaires qui sont difficiles à épurer et à traiter.

La protection sacrificielle contre la corrosion, en particulier contre la corrosion rouille rouge, de support, en particulier comprenant du fer, constituant des sous-ensembles ou composants d'équipements d'aéronefs est assurée par l'application par voie humide de composition liante mono-composant ou bi-composants, solvantée ou hydrodiluable présentant de nombreuses contraintes. En effet, les compositions mono-composant nécessitent d'être re-dispersées au moins 24 heures avant leur utilisation. Une fois ces compositions liantes appliquées sur le support à fonctionnaliser, après éventuellement une première étape d'évaporation, il est nécessaire de procéder à une première cuisson, laisser le support se refroidir, puis procéder à une seconde cuisson, qualifiée de recuit, durant plusieurs heures. Une troisième cuisson ou cuisson finale peut être nécessaire et peut durer jusqu'à 5 heures.

La mise en oeuvre de ces compositions nécessite également un compactage intermédiaire lorsqu'il y a eu un recuit intermédiaire. Cette opération consiste à projeter sur la portion de surface du support à fonctionnaliser des particules, tel que du corindon, sous une pression allant de 100 kPa à 150 KPa, lesdites particules ayant une taille comprise entre 90-180 US mesh. Une opération de compactage dite finale, donc différente de celle intermédiaire en termes de pression (kPa) et de taille des particules projetées, est également effectuée pour terminer le revêtement.

Ces compositions liantes ont également pour inconvénients majeurs de comprendre des chromates trivalents et/ou hexavalents ainsi que des borates.

En fonctionnement, ces compositions liantes sont combinées avec une pigmentation métallique sacrificielle, notamment de l'aluminium ou du magnésium, ces derniers s'associent avec les composants en chrome III ou VI dans un rôle d'inhibiteur de la corrosion et de passivation du support et de la pigmentation métallique précitée.

Les performances sacrificielles, et donc de résistance à la corrosion, ne peuvent s'obtenir qu'après les opérations de traitement précitées de recuit et de compactage dont l'application et la mise en oeuvre sont délicates, et ne peuvent être réalisées avec une garantie de succès que par des opérateurs qualifiés et certifiés.

On connait EP 0 995 816 A1 qui divulgue une composition liante comprenant en phase aqueuse des ions phosphate et des ions chrome III et des espèces cationiques secondaires telles que des ions aluminium, des ions zinc ou encore des ions magnésium à laquelle sont ajoutées également des particules d'oxydes métalliques.

Cette composition liante s'affranchit de l'emploi de chrome hexavalent mais utilise malgré tout des ions chrome III.

On connait également US 2006/0225613 décrivant la synthèse d'un oligomère d'epoxy silane qui présenterait une bonne stabilité et une bonne dispersion en milieu aqueux malgré son haut poids moléculaire. Ledit oligomère d'organosilane est mélangé avec des particules métalliques dont la quantité ne doit pas excéder 35 % en poids du poids total de la composition liante afin que le film obtenu conserve une bonne apparence (voir [0046]). Les exemples de compositions liantes (4 à 18 et 21) dont les propriétés à la corrosion ont été testées comprennent en poids 28% d'oxyde de zinc et 3% d'oxyde d'aluminium. Il n'est pas indiqué quelle est l'apparence des films obtenus. Dans tous ces exemples, la composition liante est séchée à 70°C pendant 20 minutes puis séchée à 300°C pendant 30 minutes afin de polymériser l'oligomère d'organosilane et former le film de peinture de protection contre la corrosion. Le test de résistance à la corrosion consiste à mettre en contact le substrat revêtu du film de peinture de protection contre la corrosion avec une solution saline ayant une température de 35°C définie selon la norme ISO 7253 :1984. La valeur mesurée correspond au temps au terme duquel 5% de rouille rouge comparativement au poids total du revêtement apparaît lorsque le substrat revêtue du film de peinture résistant à la corrosion est disposée dans une enceinte étuvée à 35°C. La rouille rouge correspond à l'oxydation du fer contenu dans le support à protéger de la corrosion, ce qui implique que le film de peinture résistant à la corrosion est traversé par ledit brouillard salin et ne protège plus le substrat. La norme précitée, actualisée aujourd'hui et correspondant à la norme ISO 9277 - 2012, définit le type de brouillard salin mais ne définit pas les exigences à atteindre en terme de corrosion, ni de façon précise le temps d'application dudit brouillard salin. Dans US 2006/0225613, au terme de quelques heures seulement, 5% de rouille rouge par rapport au poids total du revêtement est déjà formés. Un revêtement de protection sacrificielle contre la corrosion ne doit laisser apparaître de la rouille rouge qu'au terme de plusieurs centaines d'heures, voire plus de 1000 heures. US 2006/0225613 a ainsi pour objet une composition liante pour la fabrication d'un film de peinture contre la corrosion qui n'est pas adaptée pour la fabrication d'un revêtement de protection contre la corrosion qui est sacrificielle et qui donc est destiné à résister à des conditions corrosives extrêmes, telles qu'à plusieurs cycles de brouillard salin, chaque cycle durant plus de 15 heures et comportant une période au-cours de laquelle le revêtement est soumis pendant plusieurs heures à des températures supérieures ou égales à 250°C.

### Objet et résumé de l'invention

La présente invention a pour objet une composition liante aqueuse permettant la fabrication d'un revêtement de protection sacrificielle contre la corrosion, notamment primaire, présentant les propriétés suivantes :
u ne bonne adhérence sur le support, et avec les primaires et peintures appliqués ultérieurement en revêtement supérieur,
u ne bonne résistance à la corrosion, en particulier sacrificielle lorsque soumis à un brouillard salin tel que défini dans la norme NF EN ISO 9227 -2012,
u ne bonne résistance aux rayures, aux produits chimiques et à l'usure,
u ne résistivité électrique surfacique inférieure ou égale à 1 ohm / Square.

La présente invention a également pour objet un kit pour composition liante aqueuse apte à fonctionner sans composés cancérigènes, mutagènes ou reprotoxiques, en particulier exempte de molybdates et/ou de chromates et/ou de borates ou encore de métaux lourds.

La présente invention a également pour objet un procédé de fabrication d'un revêtement de protection sacrificielle contre la corrosion, simple à mettre en oeuvre, et ne nécessitant pas notamment d'opérations intermédiaires de recuit et de compactage pour l'obtention d'un revêtement pouvant atteindre une épaisseur finale de 90 µm.

La présente invention a ainsi pour objet, selon un premier aspect, une composition liante aqueuse pour la fabrication d'un revêtement de protection sacrificielle contre la corrosion, ladite composition étant de préférence exempte de chromates, et encore de préférence de borates et de molybdates. Ladite composition liante a un pH inférieur à 6 et comprend un liant, des particules d'au moins un oxyde métallique et au moins un phosphate métallique, ledit liant comprenant un oligomère d'organosilane hydrolysé. De plus, la proportion en poids desdites particules d'au moins un oxyde métallique par rapport au poids total de la masse sèche de ladite composition liante aqueuse est supérieure ou égale à 75%.

Il a été trouvé que la combinaison d'une quantité majoritaire de particules métalliques dans une composition liante aqueuse combinée avec au moins un phosphate métallique et un oligomère d'organosilane permet de former un revêtement de protection sacrificielle contre la corrosion ayant d'excellentes propriétés de résistance à la corrosion au brouillard salin et ce, même soumis à des cycles de températures supérieures ou égales à 250°C tout en conservant un revêtement ayant un aspect régulier sans formation de cloques ou d'autres irrégularités.

En effet, lorsque la composition liante ne comprend pas au moins un phosphate métallique, le revêtement de protection sacrificielle obtenu forme des cloques au terme d'environ cinq cycles complets de résistance au brouillard salin et à des températures d'environ 450°C, chaque cycle complet dure 24 heures et comprend un premier cycle au-cours duquel le revêtement est soumis à une température de 450°C pendant 6 heures, suivi d'un second cycle au-cours duquel ledit revêtement est laissé au repos à température ambiante, puis d'un troisième cycle au-cours duquel ledit revêtement de protection est soumis pendant 16 heures à un brouillard salin tel que défini dans la norme ISO 9227-2012, et enfin un quatrième cycle identique au troisième cycle précité.

Sans se limiter à une théorie scientifique, une explication non exhaustive serait que le revêtement de protection sacrificielle manque d'effet barrière vis-à-vis de la diffusion de l'oxygène et de l'humidité. L'oxygène et l'humidité sont soupçonnées une fois introduits dans le revêtement de protection sacrificielle, notamment lors du passage du brouillard salin, de générer la corrosion du fer revêtu par ledit revêtement à chaud dans le four à 450°C.

L'ajout d'au moins un phosphate métallique améliore l'effet barrière du revêtement de protection sacrificielle, notamment en densifiant le réseau entre les particules métalliques grâce à une très bonne affinité avec l'oligomère d'organosilane. En outre, il a également été observé que le comportement du revêtement de protection sacrificielle en présence d'au moins un phosphate métallique est plus reproductible en terme d'activité électrochimique et ce, pour différentes épaisseurs de revêtement (par exemple 25µm ou 50µm) que lorsque la composition liante ne comporte pas au moins un phosphate métallique.

Au sens de la présente invention, on entend par masse sèche de la composition liante aqueuse, éventuellement de la partie A et/ou de la partie B décrite(s) ci-après, la masse sèche résiduelle une fois le ou les composé(s) volatile(s) évaporé(s), en particulier ayant un point d'ébullition inférieur ou égal à 100°C. Il s'agit notamment de l'eau. De préférence, la masse sèche résiduelle correspond à la masse (g) de la composition liante aqueuse à laquelle la quantité d'eau qu'elle contient (g) a été soustraite.

De préférence, la partie B décrite ci-après ne comprend pas d'eau ou de composé volatil de sorte que la masse sèche de la partie B correspond au poids total de la partie B.

De préférence, la ou les particules d'oxyde(s) métallique(s) est/sont choisie(s) en sorte que leur(s) potentiel(s) galvanique(s) (mV) soi(en)t inférieur au potentiel galvanique de la surface métallique(s) à revêtir. Le potentiel galvanique peut être mesuré en plongeant deux matériaux métalliques différents dans une solution saline à une température déterminée, par exemple à environ 25°C puis en mesurant la différence de potentiel (mV) obtenue entre lesdits deux matériaux. Ainsi, les particules d'oxydes métalliques doivent être à base d'un ou plusieurs métaux qui est/sont moins noble(s) que le métal ou l'alliage métallique du support à revêtir. Au sens de la présente invention, on comprend par phosphate métallique, tout composé comprenant un ion phosphate neutre tel que le phosphate PO₄³⁻, le tripolyphosphate (P₃O₁₀⁵⁻), et l'hexamétaphosphate (P₆O₈⁶⁻), et un ou plusieurs métal(aux), ledit ou lesdits métal(aux) étant choisi(s) notamment parmi le zinc, l'aluminium, le manganèse, ou un mélange de ces derniers. De préférence, les valeurs en pourcentage indiquées dans le présent texte sont données à +/- 5% concernant le poids en différents composants. De préférence, les valeurs concernant la résistivité électrique surfacique indiquées dans le présent texte sont données à +/- 10%, encore de préférence à +/- 5%.

Dans une variante, ledit au moins un phosphate métallique est choisi dans le groupe constitué par le phosphate de zinc (Zn₃(PO₄)₂), le phosphate de manganèse (Mn₃(PO₄)₂), le phosphate d'aluminium (AlPO₄), le tripolyphosphate d"aluminium(Al₅(P₃O₁₀)₃), le phosphate d'aluminium et de zinc, et leurs mélanges, de préférence le phosphate de zinc, de préférence dans le groupe constitué par le phosphate de zinc et le tripolyphosphate d'aluminium.

Dans un mode de réalisation, la proportion en poids d'au moins un phosphate métallique est supérieure à 0% et inférieure ou égale à 15% par rapport au poids total de la masse sèche de ladite composition liante aqueuse, de préférence inférieure ou égale à 10%, encore de préférence inférieure ou égale à 8%, notamment supérieure ou égale à 3%, par rapport au poids total de la masse sèche de ladite composition liante aqueuse.

Dans une variante, ladite au moins une particule d'oxyde métallique est choisie dans le groupe constitué par l'oxyde d'aluminium, l'oxyde de zinc, l'oxyde d'un mélange zinc-magnésium, l'oxyde d'un mélange aluminium-zinc, et leurs mélanges, de préférence dans le groupe constitué par l'oxyde d'aluminium et l'oxyde du mélange aluminium-zinc.

L'oxyde du mélange aluminium-zinc comprend majoritairement en poids de l'aluminium, de préférence environ au moins 2/3 d'aluminium pour au plus 1/3 de zinc en poids.

Dans une variante, la proportion en poids de particules d'au moins un oxyde métallique est supérieure ou égale à 80%, de préférence supérieure ou égale à 85%, par rapport au poids total de la masse sèche de ladite composition liante aqueuse.

Dans une variante, ledit oligomère d'organosilane a la formule (I) suivante [R₄-(SiR₁R₂R₃)]ₙ dans laquelle n est un entier avec 2 ≤ n ≤ 100 et R₄ est un groupe non hydrolysable et au moins un groupe parmi R₁, R₂ et R₃ est un groupe hydrolysable.

De préférence, 2 ≤ n ≤ 75 ; encore de préférence 2 ≤ n ≤ 50 ; 2 ≤ n ≤ 40 ; en particulier 2 ≤ n ≤ 25 ; notamment 2 ≤ n ≤ 15.

On désigne par groupe hydrolysable tout groupe apte à se séparer de l'atome de silice sous l'effet de la décomposition de l'eau générant des ions H₃O⁺ et OH⁻, en particulier sous l'effet des ions H₃O⁺ dans le cadre de la présente invention puisque le pH de la composition liante aqueuse est inférieure à 6.

L'organosilane (I) hydrolysé forme un silanol équivalent et un alcool lors de la première réaction d'hydrolyse. L'organosilane de formule (I) réagit alors avec le silanol formé et les silanols formés réagissent entre-eux lors de secondes réactions de condensation pour la formation d'oligomères ou polymères de polysiloxane, i.e ayant des ponts -Si-O-Si-.

Les silanols réagissent également avec les particules d'oxydes métalliques pour leur greffage, en particulier avec les fonctions hydroxyles supportées en surface desdites particules.

De préférence, ledit oligomère d'organosilane est choisi parmi un oligomère d'organodialkoxysilane ou un oligomère d'organotrialkoxysilane, encore de préférence parmi un epoxy dialkoxysilane ou un epoxytrialkoxysilane ou un vinyldialkoxysilane ou un vinyltrialkoxysilane.

L'oligomère d'organosilane selon l'invention comprend un groupe R₄ non hydrolysable et au moins un groupe parmi R₁, R₂ ou R₃ hydrolysable, lesquels groupes, indépendamment les uns des autres, sont soit dans la structure même, c'est-à-dire dans la chaîne carbonée, de l'oligomère d'organosilane, par exemple, en extrémité de chaîne, ou sont des ramifications rattachées à ladite chaîne, à intervalles réguliers.

Dans une variante, R₄, et optionnellement R₁ et/ou R₂ et/ou R₃ lorsqu'il(s) représente(n)t un ou des groupe(s) non hydrolysable(s) représente(nt) indépendamment l'un de l'autre un groupe choisi parmi : un groupe alkyle en C1-C20 ou cycloalkyle en C3-C10 substitué par un ou plusieurs groupes epoxy(s), ledit groupe epoxy étant mono, di, tri ou tétravalent(s) ; un groupe glycidoxy ; un groupe alkyle en C1-C20 substitué par un groupe glycidoxy ; un groupe vinyle (CH₂=CH-) ; un groupe alkyle en C1-C20 substitué par un groupe vinyle (CH₂=CH-) ; un groupe alkyle en C1-C20 substitué par une amine primaire et/ou une amine secondaire et/ou une amine tertiaire ; une amine primaire ; une amine secondaire ; une amine tertiaire ; un groupe alkyle en C1-C20 substitué par un groupe thiol ; un groupe thiol ; un groupe urée ; un groupe alkyle en C1-C20 substitué par un groupe urée ; un groupe isocyanate ; un groupe alkyle en C1-C20 substitué par un groupe isocyanate.

En outre, au moins un groupe parmi R₁, R₂, et R₃ représente en tant que groupe hydrolysable un groupe alcoxy en C1-C10 ; un groupe cycloalkyloxy en C3-C10; un groupe aryloxy en C5-C10 ou un groupe acyloxy en C1-C5..

Lesdits groupes alkyles précités, que ce soit pour le groupe hydrolysable ou le groupe non hydrloysable, sont saturés, linéaires ou ramifiés, en C1-C20, encore de préférence en C1-C15, et encore de préférence en C1-C10 et les groupes cycloalkyles sont saturés, et de préférence, en C3-C6.

Au sens de la présente invention, lorsqu'un groupe est en Cn-Cp (également décrit comme en Cn à Cp), cela signifie qu'il présente de n à p atomes de carbones, n et p étant des nombres entiers.

Les groupes epoxys monovalents sont par exemple le groupe glycidoxy, -O-CH₂-C₂H₃O ou encore le groupe Rᵢ-C₂H₃O (ou Ri-oxirane) dans lequel Rᵢ est une chaine alkyle linéaire ou ramifiée, saturée ou non, un cycloalkyle, un alkenyl, un aryl, un ether, un polyether. Les chaines alkyles précitées sont de préférence en C1 à C10, et les cycloalkyles précités sont de préférence en C3 à C10, et encore de préférence en C3 à C6.

Les groupes epoxys divalents sont par exemples les groupes suivants -(-)C(-O-)CRᵢᵢRᵢᵢᵢ et -CRᵢᵢ(-O-)CRᵢᵢᵢ-, les groupes epoxy trivalents sont par exemples les groupes suivants -(-)C(-O-)CRᵢᵢ, les groupes epoxy tétravalents sont par exemples les groupes suivants -(-)C(-O-)C(-), dans lesquels Rᵢᵢ et Rᵢᵢᵢ sont indépendamment l'un de l'autre une structure choisie parmie celles listées ci-dessus pour Rᵢ.

De préférence, la teneur en fonction epoxy de l'oligomère de formule I, c'est-à-dire en fonction oxirane, est inférieure ou égale à 15 mmoles/g d'oligomère d'organosilane, de préférence inférieure ou égale à 10 mmoles/g d'oligomère d'organosilane, et encore de préférence inférieure ou égale à 4,75 mmoles/g d'oligomère d'organosilane.

Au sens de la présente invention, on entend par « groupe alkoxy » tout groupe de formule Ra-O dans lequel Ra représente un groupe alkyle saturé linéaire ou ramifié, comportant éventuellement une fonction -OH, de préférence en C1 à C10, de préférence encore en C1 à C6, encore de préférence en C1 à C4, tels que par exemple les groupes méthoxy, éthoxy, isopropoxy, n-propoxy, i-propoxy, n-butoxy, i-butoxy , sec-butoxy, tert-butoxy, n-pentoxy, et n-hexyloxy.

Au sens de la présente invention, on entend par « groupe cycloalkyloxy » tout groupe de formule Rb-O dans lequel Rb représente un groupe cycloalkyle, de préférence en C3 à C10, tel que les groupes cyclopropyloxy et cyclohexyloxy.

Au sens de la présente invention on entend par « groupe cycloalkyle» tout groupe alkyle cyclique, de préférence en C3 à C10, par exemple le groupe cyclohexyl ou cyclopropyl.

Au sens de la présente invention, on entend par « groupe aryloxy », tout groupe de formule Rc-O dans lequel Rc représente un groupe aryle, de préférence en C5 à C10, tel que par exemple le groupe phénoxy.

Au sens de la présente invention, on entend par « groupe aryle » un ou plusieurs cycles aromatiques ayant avantageusement 5 à 10 atomes de carbones, pouvant être accolés ou fusionnés. En particulier, les groupes aryles peuvent être des groupes monocycliques ou bicycliques, de préférence il s'agit du groupe phényle.

Au sens de la présente invention, on entend par « groupe acyloxy », tout groupe de formule Rd-CO-O dans lequel Rd représente un groupe alkyle saturé linéaire ou ramifié, de préférence en C1 à C4, tels que par exemple les groupes acétoxy et propionyloxy.

Les groupes alcoxy, en particulier le groupe méthoxy, éthoxy et isopropoxy sont les groupes hydrolysables préférés.

Au sens de la présente invention, on entend par amine primaire tout groupe de formule RₑNH₂, par amine secondaire tout groupe de formule RₑR_{f}NH, par amine tertiaire tout groupe de formule RₑR_{f}R_{g}N, dans lesquelles Rₑ, R_{f} et R_{g} sont des groupes alkyles saturés ou non, linéaires ou ramifiés, de préférence en C1 à C20, ou encore de préférence en C1 à C10, et encore de préférence en C1 à C4.

Au sens de la présente invention, on entend par groupe thiol tout groupe de formule Rₕ-SH dans lequel Rₕ est un groupe alkyle, saturé ou non, linéaire ou ramifié, de préférence en C1 à C20, encore de préférence en C1 à C10, de préférence encore en C1 à C4.

Au sens de la présente invention, on entend par groupe urée tout groupe de formule (Rᵢ,Rⱼ)N-C(=O)-N(Rₖ, Rₗ) dans lequel Rᵢ, Rⱼ, Rₖ et Rₗ sont indépendamment les uns des autres un atome d'hydrogène ou une chaine alkyle, saturée ou non, linéaire ou ramifiée, de préférence en C1 à C20, encore de préférence en C1 à C10, et encore de préférence en C1 à C4.

Au sens de la présente invention, on entend par groupe isocyanate tout groupe de formule Rₘ-N=C=O dans lequel Rₘ est un atome d'hydrogène ou une chaine alkyle, saturée ou non, linéaire ou ramifiée, de préférence en C1 à C20, encore de préférence en C1 à C10, et encore de préférence en C1 à C4.

Au sens de la présente invention, on entend par groupe alkényle, tout groupe de formule RₒRₚC = CRᵣRₛ dans lequel Rₒ, Rₚ, Rᵣ, Rₛ sont indépendamment les uns des autres un atome d'hydrogène ou une chaine alkyle, saturée ou non, linéaire ou ramifiée, de préférence en C1 à C20, encore de préférence en C1 à C10, et encore de préférence en C1 à C4, tel que, par exemple, un groupe vinyle.

Dans une variante, R₁ et/ou R₂ et/ou R₃, de préférence R₁ et R₂, R₂ et R₃ ou R₁ et R₃, encore de préférence R₁, R₂ et R₃, représentent un groupe alcoxy, un groupe cycloalcoxy, un groupe aryloxy ou un groupe acyloxy, de préférence un groupe alcoxy en C1-C6.

Dans une variante, R₄ est un groupe alkyle substitué par un groupe epoxy, de préférence glycidoxy, de formule X-Y- rattaché à l'atome de silice, dans lequel X est un groupe glycidoxy, -O-CH₂-C₂H₃O; ou oxirane ; et Y est un groupe choisi parmi : -(CH₂)n-, avec 1 ≤ n ≤ 12, encore de préférence avec 1 ≤ n ≤ 6 ; et un groupe comprenant un cycloalkyle en C3-C6.

Dans une variante, le groupe alcoxy est choisi parmi les groupes suivants : méthoxy, éthoxy, propoxy, isopropoxy, isobutoxy, acetoxy, methoxyethoxy, groupes alkoxy monovalent dérivés des diols comprenant un alcool et un alkoxy choisi parmi -O-CH₂CH₂-OH, tel que l'éthylèneglycol ; le propylèneglycol ; le neopentyl glycol ; le 1,3-propanediol ; 2-méthyl-1,3-propanediol ; 1,3-butanediol ; 2-methyl-2,4-pentanediol ; 1.4-butanediol ; cyclohexane diméthanol ; picanol, de préférence parmi les groupes méthoxy ; éthoxy ; propoxy et isopropoxy.

Dans une variante, le motif R₄-(SiR₁R₂R₃) de l'oligomère d'organosilane de formule I est choisi parmi une liste (IIa) : gamma-glycidoxypropyltriméthoxysilane ; gamma-glycidoxypropyltriéthoxysilane ; gamma-glycidoxypropyl methyldimethoxysilane ; gamma-glycidoxypropylmethyldiethoxysilane ; et parmi une liste (IIb) : beta-(3,4-epoxycyclohexyl)-ethyl triméthoxysiloxane ; beta-(3,4-epoxycyclohexyl)-ethyl methyl dimethoxysilane, beta-(3,4-epoxycyclohexyl)-éthyl méthyl diéthoxysilane ; beta-(3,4-epoxycyclohexyl)-éthyl triéthoxysilane, de préférence parmi la liste (IIa).

De préférence, la formule générale du composé d'oligomère d'organosilane selon l'invention est (CₓH_{y}O_{z}Si)ₙ avec 4 ≤ x ≤ 20, encore de préférence x ≤15, et encore de préférence x ≤10, avec 15 ≤ y ≤ 30, et z ≥2, encore de préférence z ≥4, et encore de préférence z≤ 6, n étant en entier avec 2 ≤ n ≤ 100.

Le choix de l'oligomère d'organosilane est important afin de former un film sur le support à protéger dans lequel les particules d'oxydes métalliques interagissent avec les atomes de silice et forment un réseau organisé une fois que les composants à base de carbone et d'oxygène auront été détruits par chauffage tel que cela est décrit ci-après.

Dans une variante, l'oligomère d'organosilane hydrolysé représente entre 5% et 30% en poids du poids total de la masse sèche de ladite composition liante aqueuse, de préférence entre 5% et 15% en poids du poids total de la masse sèche de ladite composition aqueuse, encore de préférence entre 5% et 10% en poids du poids total de ladite composition liante aqueuse.

Dans une variante, la composition liante aqueuse comprend un catalyseur acide choisi dans le groupe constitué par l'acide p-toluène sulfonique, l'acide phosphorique, l'acide borique, l'acide acétique, et leurs mélanges, de préférence dans le groupe constitué par l'acide p-toluène sulfonique, l'acide acétique et l'acide phosphorique, encore de préférence le catalyseur est l'acide p-toluène sulfonique.

Ce catalyseur permet d'amorcer la réaction de polymérisation par auto-condensation, laquelle est activée par apport de chaleur en particulier lors du séchage (iii) et surtout lors de l'étape de recuit intermédiaire (v) ou final (vi), lesquelles sont décrites ci-après.

De préférence, le ratio du nombre de moles/litre du catalyseur acide sur celui du composé organosilane de formule (I) est compris entre 1/60 et 1/5, encore de préférence entre 1/40 et 1/20.

Dans une variante, les particules d'au moins un oxyde métallique ont une répartition granulométrique pour 10% à 90% en poids desdites particules comprise entre 2 µm et 30 µm, de préférence lesdites particules sont sphériques.

La granulométrie est mesurée par voie sèche ou humide, à l'aide d'un granulomètre laser, tel que ceux commercialisés par la société MALVERN, tel que le MASTERSIZE 3000 ^{®} ou 2000 ^{®}.

La présente invention a pour objet selon un deuxième aspect, un kit pour composition liante aqueuse selon l'une quelconque des variantes de réalisation précédentes, ledit kit comprend une partie A ayant un pH inférieur à 6 constituée par une composition aqueuse comprenant un oligomère d'organosilane hydrolysé et une partie B comprenant des particules d'au moins un oxyde métallique et au moins un phosphate métallique, la proportion en poids de particules d'au moins un oxyde métallique par rapport au poids total des masses sèches des parties A et B additionnées soit supérieure ou égale à 75%.

De préférence, la proportion en poids des particules dudit au moins un oxyde métallique par rapport au poids total de la masse sèche de la partie B et la proportion en poids de la masse sèche de la partie B par rapport au poids total de la masse sèche de la partie A sont déterminées en sorte que la proportion en poids de particules d'au moins un oxyde métallique par rapport au poids total des masses sèches des parties A et B additionnées soit supérieure ou égale à 75%.

L'oligomère d'organosilane hydrolysé de la partie A correspond à l'oligomère d'organosilane décrit ci-dessus, en particulier à celui de formule I décrit ci-dessus et selon toutes les variantes de réalisation décrites ci-dessus en référence au premier aspect.

Les particules d'au moins un oxyde métallique sont selon l'une quelconque des variantes de réalisation décrites ci-dessus selon le premier aspect.

Ledit au moins un phosphate métallique est selon l'une quelconque des variantes de réalisation décrites ci-dessus selon le premier aspect.

Dans une variante, l'hydrolysat de l'oligomère d'organosilane représente entre 5% et 50% en poids, de préférence entre 5% et 30% en poids par rapport au poids total de la masse sèche de la partie A.

La présente invention a également pour objet, selon un troisième aspect, l'utilisation de la composition liante aqueuse selon l'une quelconque des variantes de réalisation précédentes ou du kit tel que décrit ci-dessus pour former un revêtement de protection sacrificielle contre la corrosion sur au moins une portion de surface d'un support, en particulier un support en un matériau choisi parmi les métaux, les alliages de métaux, et les matériaux composites comprenant un métal ou un alliage de métal, de préférence ayant une résistivité électrique surfacique inférieure à 1 ohm/square.

Avantageusement, ladite portion de surface du support présente un potentiel galvanique (mV) supérieur au potentiel galvanique (mV) des particules métalliques que comprend ledit revêtement.

De manière générale, ledit support est tout élément métallique soumis à des conditions d'usure sévères, par exemple : un arbre de turbine de moteur ou de générateur, un essieu de matériel(s) roulant(s) routier et ferroviaire, un arbre de transmission de puissance ou de mouvement, les roulements à billes d'éoliennes, une pièce métallique de construction offshore, ou encore un élément particulier d'un aéronef.

De préférence, ledit revêtement de protection sacrificielle a une résistivité électrique surfacique inférieure à 1 ohm / square.

La résistivité indiquée ci-dessus correspond à une résistivité surfacique indiquée lorsque l'on considère l'épaisseur du revêtement dont on mesure la résistivité comme négligeable.

De préférence, le revêtement de protection sacrificielle contre la corrosion selon l'invention a une épaisseur supérieure ou égale à 20 µm et inférieure ou égale à 120 µm, encore de préférence supérieure ou égale à 40 µm, plus particulièrement inférieure ou égale à 90 µm, notamment inférieure ou égale à 60 µm, à l'état sec, notamment après l'étape de recuit final et/ou l'étape de compactage final.

La présente invention a pour objet, selon un quatrième aspect, un procédé de fabrication et d'application d'un revêtement de protection sacrificielle contre la corrosion sur au moins une portion de surface d'un support mettant en oeuvre la composition liante aqueuse décrite selon l'une quelconque des variantes de réalisation précédentes, comprenant les étapes successives suivantes :
(i) une étape de fourniture et de préparation d'au moins une portion de surface d'un support en métal ou en alliage de métal ;
(ii) une étape d'application de la composition liante aqueuse selon l'une quelconque des variantes de réalisation précédentes de façon à former une couche de film humide sur au moins ladite portion de surface ;
(iii) une étape de séchage pour évaporer l'eau et permettre la formation d'un film à une température comprise entre 60°C et 90°C pendant au moins 5 minutes;
(iv) optionnellement, les étapes (ii) et (iii) sont répétées jusqu'à l'obtention d'un film ayant une épaisseur déterminée ;
(v) optionnellement, après chaque étape de séchage (iii) à l'exception de la dernière étape de séchage (iii), une étape de recuit intermédiaire et/ou une étape de compactage intermédiaire est/sont appliquée(s) audit film ;
(vi) une étape de recuit finale dudit film obtenu à l'issue de l'étape (iii) à une température supérieure ou égale à 250°C pendant au moins 30 minutes ;
(vii) une étape de compactage finale de ladite au moins une portion de surface revêtue dudit film de protection sacrificielle contre la corrosion en sorte de former un revêtement de protection sacrificielle contre la corrosion, de préférence ayant une résistivité électrique surfacique inférieure à 1 ohm / square.

Avantageusement, l'étape de compactage a pour fonction d'écrouir le revêtement de protection sacrificielle.

L'étape de recuit finale (vi) et l'étape de compactage finale (vii) étant effectuées sur le film après la dernière étape de séchage (iii) appliquée audit film, une étape de recuit intermédiaire ou une étape de compactage intermédiaire ne sont pas effectuées car elles seraient redondantes avec les étapes correspondantes finales.

De préférence, chaque étape de compactage, qu'elle soit intermédiaire ou finale, comprend la projection d'une poudre, telle que le corindon (Al₂O₃), dont la granulométrie est de préférence comprise entre 80 et 200 US mesh, encore de préférence entre 80 et 180 US mesh, sous une pression supérieure ou égale à 100 kPa, de préférence supérieure ou égale à 200 kPa.

Il a été trouvé que la combinaison d'une composition liante aqueuse comprenant majoritairement des particules d'au moins un oxyde métallique en présence d'au moins un phosphate métallique, un oligomère d'organosilane hydrolysé subissant une étape de recuit finale appropriée combinée avec une étape de compactage finale permet de former un revêtement de protection sacrificielle contre la corrosion ayant une résistivité électrique surfacique inférieure à 1 ohm / square, et une excellente résistance à la corrosion dans le temps et en température sans l'utilisation de chromates, de molybdates ou encore de borates, tout en conservant un bon aspect.

Avantageusement, une étape de recuit intermédiaire et/ou une étape de compactage intermédiaire n'est/ ne sont pas obligatoire(s) pour former un revêtement de protection sacrificielle contre la corrosion satisfaisant comparativement à l'état de la technique. En effet, l'utilisation d'une composition liante selon l'invention permet de réaliser les étapes (ii) et (iii) successivement autant de fois que nécessaires jusqu'à l'obtention d'un film humide ayant l'épaisseur désirée puis de procéder directement à une étape de recuit finale suivie d'une étape de compactage finale sans avoir besoin de recuit intermédiaire et/ou de compactage intermédiaire.

Avantageusement, il est possible de déposer la couche de composition liante selon l'invention selon une seule couche de film humide ayant une épaisseur pouvant aller jusqu'à 140 µm, ce qui correspond à un revêtement de protection sacrificielle fini et donc à l'état sec de l'ordre de 90 µm. Dans l'état de la technique, il est nécessaire d'appliquer plusieurs couches de compositions liantes puis de les sécher et d'effectuer éventuellement des étapes de recuit intermédiaires et/ou des étapes de compactage intermédiaires pour atteindre cette épaisseur de 90µm sur le revêtement fini.

Cette disposition représente un gain de temps important ainsi qu'une économie du procédé selon l'invention comparativement aux procédés de l'état de la technique.

De préférence, la température (°C) et la durée d'application de l'étape de recuit sont déterminées en sorte que ledit revêtement de protection sacrificielle contre la corrosion comprenne par rapport à son poids total, moins de 10% en poids, de préférence moins de 5% en poids d'un résidu hydrocarboné.

De préférence, l'étape d'application ii) comprend une étape de pulvérisation ou d'aspersion de la composition liante aqueuse pigmentée selon l'invention encore de préférence une étape de pulvérisation.

De préférence, l'étape de séchage iii) comprend la soumission du support à une température comprise entre 80°C et 90°C pendant au moins 5 minutes, encore de préférence pendant au moins 20 minutes et au plus 10 heures, de préférence au plus 2 heures.

De préférence, l'étape de recuit final (vi) ou intermédiaire (v) a lieu à une température supérieure ou égale à 250°C, notamment inférieure ou égale à 500°C, encore de préférence supérieure ou égale à 285°C, et en particulier inférieure ou égale à 480°C, pendant au moins trente minutes, de préférence au moins 45 minutes, encore de préférence au moins 2 heures, encore de préférence au moins 15h, encore de préférence au plus 24 heures, notamment au plus 20 heures.

De préférence, si la température est supérieure ou égale à 400°C, le temps de cuisson est supérieure ou égale à 3 heures, de préférence supérieure ou égale à 4 heures. Si la température est inférieure ou égale à 300°C, par exemple inférieure ou égale à 285°C, le temps de recuit est supérieur ou égal à 10 heures, encore de préférence supérieur ou égal à 15 heures, plus particulièrement supérieur ou égal à 20 heures.

Cette étape permet dans un premier temps la polymérisation de l'hydrolysat de l'oligomère d'organosilane et la répartition homogène des particules d'oxydes métalliques par rapport aux atomes de silice en créant des ponts entre la silice et lesdites particules, puis dans un second temps, les composants comprenant notamment de l'oxygène et du carbone sont dégradés-carbonisés pour former un revêtement comprenant majoritairement de la silice organisée avec les particules métalliques dans l'épaisseur dudit revêtement. De préférence, cette étape permet la formation d'un revêtement comprenant des particules métalliques et de la silice, et moins de 10% en poids, de préférence moins de 5% en poids d'un résidu hydrocarbonée notamment issu de la dégradation dudit oligomère hydrocarbonée, de préférence ledit revêtement étant exempt de chromes, encore de préférence étant exempt de borates et de molybdates.

Ledit revêtement comprend ainsi au moins 90% en poids de son poids, de préférence au moins 95% en poids de son poids, de particules métalliques, notamment d'aluminium et/ou de zinc, et/ou de magnésium, de préférence d'aluminium et/ou de zinc.

Dans une variante, l'étape de préparation i) comprend une étape de sablage de ladite au moins une portion de surface en sorte que ladite portion de surface présente une surface rugueuse, de préférence la rugosité de surface est inférieure à 100 µm, et supérieure à 1µm, encore de préférence comprise entre 2µm et 3 µm.

La rugosité de surface peut être mesurée selon la norme NF EN ISO 8503 datant d'avril 2012.

De préférence, l'étape de sablage comprend la projection de particules, en particulier de corindon, ayant une granulométrie inférieure ou égale à 120 US mesh, de préférence inférieure ou égale à 100 US mesh, et encore de préférence inférieure ou égale à 80 US mesh, sous une pression supérieure ou égale à 200 kPa, encore de préférence supérieure ou égale à 300 kPa.

Dans une variante, le pH de la composition liante aqueuse appliquée sur le substrat lors de l'étape (ii) est ajusté entre 2 et 4, de préférence à une température comprise entre 15°C et 40°C, et encore de préférence à une température comprise entre 15°C et 30°C, plus particulièrement entre 20°C et 30°C.

Dans une variante, le pH est ajusté à l'aide d'un acide choisi dans le groupe constitué par l'acide p-toluène sulfonique, l'acide phosphorique, l'acide borique, l'acide acétique et leurs mélanges, de préférence l'acide p-toluène sulfonique, l'acide phosphorique, l'acide acétique, encore de préférence l'acide p-toluène sulfonique (p-TSA).

Dans une variante, l'étape de pigmentation consistant à ajouter des particules d'au moins un oxyde métallique à la composition liante aqueuse et au moins un phosphate métallique, en particulier sous forme d'une poudre métallique, en sorte d'obtenir la composition liante pigmentée utilisée à l'étape ii) est effectuée sous agitation pendant au moins une minute, de préférence pendant au moins 15 minutes sous agitation, encore de préférence au moins pendant 30 minutes sous agitation à une température comprise entre 15°C et 40°C, de préférence entre 15°C et 30°C, plus particulièrement entre 20°C et 30°C.

Dans une variante, l'étape d'application de la composition liante ii) comprend la pulvérisation de ladite composition sur ladite au moins une portion de surface du support en sorte de former une couche d'un film, à l'état humide, ayant une épaisseur supérieure ou égale à 25 µm et inférieure ou égale à 200 µm, de préférence supérieure ou égale à 30 µm et inférieure ou égale à 185 µm encore de préférence supérieure ou égale à 60µm, plus particulièrement inférieure ou égale à 140 µm.

L'épaisseur peut être mesurée selon la norme NF EN ISO 2808, à l'aide par exemple de l'appareil commercialisé sous la marque POSITECTOR 6000 ^{®} utilisant les principes des courants magnétiques et des courants de Foucault pour mesurer l'épaisseur de revêtement sur métaux ferreux et non ferreux.

Dans une variante, l'étape d'application ii) est effectuée au plus tôt 30 minutes après l'étape de pigmentation consistant à ajouter les particules d'au moins un oxyde métallique et au moins un phosphate métallique à la composition aqueuse, en particulier du phosphate de zinc ou du tripolyphosphate d'aluminium.

La présente invention a pour objet, selon un cinquième aspect, un support en un matériau choisi parmi les métaux, les alliages de métaux et les matériaux composites comprenant un métal ou un alliage de métal, de préférence en fer et dans un alliage comprenant du fer, ayant au moins une portion de surface revêtue d'un revêtement de protection sacrificielle contre la corrosion, obtenu par la mise en oeuvre du procédé selon l'une quelconque des variantes de réalisation décrites ci-dessus et comprenant des particules métalliques, du phosphore, et de la silice, et moins de 10% en poids par rapport à son poids total, de préférence moins de 5% en poids par rapport à son poids total d'un résidu hydrocarbonée, de préférence ledit revêtement étant exempt de chromes, encore de préférence étant exempt de borates et de molybdates.

Au sens de la présente invention, on comprend par résidu hydrocarboné tout résidu comprenant du carbone et de l'oxygène.

Dans une variante, le revêtement présente une résistivité surfacique électrique inférieure à 1 ohm / square.

Dans le cadre de la présente invention, la résistivité électrique peut être mesurée à l'aide d'un multimètre, ou encore selon la norme ASTM D 257-07 datant de 2007 intitulée « Standard test methods for D-C résistance or conductance of insulating materials ». De préférence, 1 square est de l'ordre de 2,6 cm².

La résistivité électrique surfacique d'un revêtement de protection contre la corrosion est déterminée en mesurant la capacité dudit revêtement à conduire un courant électrique. Sa fonction réciproque correspond à la conductivité électrique (= 1/résistivité électrique). Lorsque la résistivité électrique mesurée est basse, ledit revêtement est un bon conducteur électrique. Au contraire, lorsque la résistivité électrique est élevée, le revêtement est un bon isolant électrique.

### Description détaillée d'exemples de réalisation

La présente invention sera mieux comprise à la lecture des exemples de réalisation ci-après, cités à titre non limitatif.

### I- Exemples de formulations d'une composition liante selon l'invention comprenant au moins un phosphate métallique :

### Exemple 1 :

### Préparation de la partie A du kit selon l'invention à partir des composés suivants :

- un oligomère d'organosilane, dérivé du gamma-glycidoxypropyltriméthoxysilane (C₉H₂₀O₅Si): entre 20 et 40 grammes,
- eau déminéralisée : entre 60 et 80 ml.

Le pH de la partie A est ajusté à l'aide de l'acide p-TSA entre 2 et 3.

### Préparation de la partie B du kit selon l'invention à partir des composés suivants :

- poudre d'oxyde métallique à base d'aluminium avec ou sans zinc : entre 5 et 65 grammes ;
- phosphate de zinc.

Entre 25 et 45 grammes de la partie A sont mélangés avec la partie B pour la formation d'une composition liante aqueuse. La proportion en poids de particules d'au moins un oxyde métallique dans le mélange des parties A et B est supérieure ou égale à 75% par rapport au poids total de la masse sèche de la composition aqueuse. La proportion en poids dudit phosphate de zinc par rapport au poids total de la masse sèche de la composition aqueuse est comprise entre 3% et 8%, bornes incluses.

Après pigmentation de la partie A, le pH est de nouveau contrôlé, dans cet exemple précis le pH est compris entre 2 et 3.

L'exemple 2 est strictement identique à l'exemple 1 excepté que le phosphate de zinc est remplacé par du tripolyphosphate d'aluminium.

### Exemple 3 :

### Préparation de la partie A du kit selon l'invention à partir des composés suivants :

- un oligomère d'organosilane, dérivé du triméthoxyvinylsilane (C₅H₁₂O₃Si) : entre 10 et 30 grammes ;
- eau déminéralisée : entre 60 et 80 ml.

Le pH de la partie A est ajusté entre 2 et 3 à l'aide de l'acide p-TSA.

### Préparation de la partie B du kit selon l'invention à partir des composés suivants :

- poudre d'oxyde métallique à base d'aluminium avec ou sans zinc : 45-65 grammes ;
- phosphate de zinc.

Entre 35 et 55 grammes de la partie A sont mélangés avec la partie B. La proportion en poids de particules d'au moins un oxyde métallique dans le mélange des parties A et B est supérieure ou égale à 75% par rapport au poids total de la masse sèche de la composition liante aqueuse. La proportion en poids dudit phosphate de zinc par rapport au poids total de la masse sèche de la composition aqueuse est comprise entre 3% et 8%, bornes incluses.

Après pigmentation de la partie A, le pH est de nouveau contrôlé, dans cet exemple précis le pH est compris entre 2 et 3.

L'exemple 4 est strictement identique à l'exemple 3 excepté que le phosphate de zinc est remplacé par du tripolyphosphate d'aluminium.

### II- Préparation d'un support témoin selon un procédé de l'état de la technique

La surface d'un support en acier est revêtu d'un revêtement de protection sacrificielle contre la corrosion par la mise en oeuvre d'un procédé de chromatation de l'état de la technique, en particulier à base de chrome VI. Le support obtenu est qualifié de témoin de l'état de la technique.

Ce support subit tout d'abord une première étape de préparation de sa surface, en particulier la surface est dégraissée avec un produit basique, tel que celui commercialisé sous la référence TURCO 5948 DMP par la société Henkel.

La surface est ensuite rincée à l'eau déminéralisée puis séchée avec de l'air soufflé. La surface est alors prête à être sablée, en particulier à l'aide de particules de Corindon blanc dont la granulométrie est de l'ordre de 80 µm sous une pression de pulvérisation desdites particules de l'ordre de 300 kPa afin d'obtenir une rugosité de surface de 2 µm à 3µm d'épaisseur.

La composition liante aqueuse de l'état de la technique est agitée 24 heures avant emploi puis filtrée sur un tamis en inox ayant des ouvertures de l'ordre de 0,025 mm. La composition est de nouveau agitée juste avant son application en deux couches successives. L'épaisseur moyenne d'une couche compactée est alors de 25 µm. Le support revêtu d'une couche de composition liante est séché à une température de 80°C pendant 15 minutes. La couche passe alors de la couleur verte à la couleur grise. Le délai maximum entre cette étape de séchage et l'étape de recuit est au maximum de 30 minutes. Ainsi quasi immédiatement après le séchage, le support revêtu subit une opération de recuit intermédiaire à 285°C pendant 3 heures minimum pour chaque couche appliquée (recuit intermédiaire après application de chaque couche) ou à 215°C pendant 20 heures minimum si le support est cadmié avant ou 285°C pendant 5h par un recuit final. Chaque couche est compactée lors d'une étape de compactage intermédiaire ou final à l'aide d'une projection de corindon de taille comprise de 90-180 US mesh et sous l'application d'une pression de 1 à 150 kPa.

### III - Préparation d'un support en acier selon le procédé décrit ci-dessous et les exemples 1 à 4 de compositions liantes pigmentées décrites au paragraphe I.

Un support en acier est préparé selon les mêmes opérations que le support témoin ; seuls diffèrent les paramètres de l'opération de sablage dans laquelle les particules sont projetées sous une pression de 300 à 400 kPa et ont une taille supérieure puisqu'inférieure ou égale à 80 mesh. En outre aucune étape de recuit intermédiaire et aucune d'étape de compactage intermédiaire ne sont effectuées.

La partie A activée de l'un des exemples 1 à 4, c'est-à-dire ayant un pH entre 2 et 3, est alors mélangée à une pâte métallique (partie B de l'un des exemples 1 à 4) pendant 20 minutes pour former une composition liante aqueuse activée selon l'un des exemples 1 à 4 laquelle est ensuite filtrée sur un tamis ayant des ouvertures de l'ordre de 0,12 mm.

La composition liante activée et pigmentée selon l'un des exemples 1 à 4 est agitée juste avant son application. La composition liante selon l'un des exemples 1 à 4 est appliquée en une seule couche de film humide par exemple de 25 µm à 200 µm d'épaisseur selon les spécifications par pulvérisation pneumatique basse pression, i.e de préférence à une pression comprise entre 150 kPa et 200 kPa en 2 à 6 couches croisées.

Pour des pièces complexes, il est possible d'appliquer la composition liante en plusieurs couches.

Le support revêtu subit ainsi une étape de séchage ii) ou d'étuvage au cours de laquelle il est soumis par exemple à une température de l'ordre de 90°C pendant au moins 60 minutes permettant le changement de couleur de la couche du gris foncé au gris clair.

Le support revêtu subit ensuite une étape de recuit finale (vi) au cours de laquelle il est soumis à une température de 420°C pendant 4 heures ou de 285°C pendant 20 heures. Le revêtement formé à la surface du support est enfin compacté lors d'une étape de compactage finale (vii) par la pulvérisation de corindon ayant une taille comprise entre 80 et 180 US mesh, bornes incluses, sous une pression supérieure ou égale à 200 kPa environ.

Le tableau I ci-dessous reprend les résultats des tests effectués sur le support obtenu selon le procédé décrit ci-dessus au paragraphe III, les résultats sont les mêmes pour toutes les compositions liantes aqueuses.

| TESTS | NORMES | EXIGENCES | RESULTATS |
|---|---|---|---|
| Application | | Aspect visuel continu et uniforme | Aspect visuel continu et uniforme |
| Épaisseur finale | NF EN ISO 2808 | 25 à 90 µm | 25 à 90 µm |
| Corrosion apparition de rouille rouge | NF ISO 9227-2012 | 1000 heures | La rouille rouge apparait dans la blessure des revêtements testés après plus de 1200 heures. Sans blessure, la rouille rouge apparait après plus de 2500 heures. |
| Adhérence | NF ISO 2409 | Classe 0 ou 1 | Classe 0 |
| Dureté | NF ISO 1518 | > 2500g avant immersion | > 2500g avant immersion |
| Tenue aux contaminants | NF ISO 2409 | Spécifique à chaque fluide | Skydrol : |
| | NF ISO 1518 | | Classe 0 >2400g après immersion |
| Tenue humidité | NF ISO 2409 | 10 cycles | Après 10 cycles |
| | NF ISO 1518 | | Adhérence : classe 0 |
| | | | Dureté : > 2400g |
| Tenue aux variations de température | NF ISO 2409 | 100 cycles | Après 100 cycles |
| | NF ISO 1518 | | Adhérence : classe 0 |
| | | | Dureté : > 2400g |
| Corrosion en température | NF ISO 9227-2012 | 20 cycles (A), 25 cycles (B) 20 cycles (C) | Aucune cloque sur les éprouvettes testées ne s'est formée, ni de rouille rouge puisque les revêtements testés sont restés intacts. |
| Test de conductivité | ASTM Standard D 257-07 (2007) : « Standard Test Method for D-C resistance or conductance of insulating material ». | R < 15 Ohms / square | R <1 Ohm / square |

Tableau 1
20 cycles (A) dont chaque cycle (A) comprend successivement : un premier cycle de 6 heures à 450°C, un second cycle d'1 heure au repos dans une enceinte tempérée à 35°C, un troisième cycle de 16 heures au brouillard salin, un quatrième cycle identique au troisième cycle.
25 cycles (B) dont chaque cycle (B) est identique au cycle (A) à la différence que la température du premier cycle est de 400°C.
20 cycles (C) dont chaque cycle (C) est identique au cycle (A) à la différence que la température du premier cycle est de 550°C.

Concernant la corrosion à la rouille rouge, les essais ont été effectués au brouillard salin sur des éprouvettes comportant une blessure ou non, la blessure étant une rayure en forme de croix effectuée dans le revêtement à tester, lequel a une épaisseur comprise entre 40 µm et 60 µm.

Le brouillard salin et ses conditions d'application sont définis dans la norme ISO9227-2012.

### IV - Exemples comparatifs de compositions liantes aqueuses sans phosphate métallique.

Deux compositions liantes référencées 5 et 6, correspondant respectivement aux exemples de compositions liantes 1 et 2 ont été préparées à chaque fois sans phosphate métallique.

Concernant le test de la corrosion jusqu'à apparition de rouille rouge, on observe l'apparition de rouille rouge dans la blessure à environ 500 heures. Sans blessure, de la rouille rouge n'apparait qu'aux environ de 1000 heures. Ces résultats sont valables pour les deux compositions liantes 5 et 6.

Concernant le test de corrosion en température, on observe la formation de cloques après 5 cycles dans les trois cas (A), (B) et (C) et ce pour les deux compositions liantes 5 et 6.

En conclusion, l'ajout d'au moins un phosphate métallique, en particulier de phosphate de zinc ou du tripolyphosphate d'aluminium, a permis de doubler la résistance au brouillard salin du revêtement selon l'invention comportant une blessure comparativement aux revêtements exempts de phosphate métallique.

Sans rayure effectuée dans les éprouvettes, après 2500 heures d'exposition au brouillard salin, les éprouvettes testées ne présentent pas de piqûres liées à la corrosion, ni de cloques. L'ajout d'au moins un phosphate métallique, en particulier de phosphate de zinc ou de tripolyphosphate d'aluminium, a donc permis de doubler la résistance au brouillard salin des revêtements de protection sacrificielle selon l'invention sans blessure.

L'ajout d'au moins un phosphate métallique, en particulier de phosphate de zinc ou de tripolyphosphate d'aluminium, permet donc d'améliorer très significativement l'activité électrochimique du revêtement de protection sacrificielle contre la corrosion, ainsi que la résistance à la corrosion au brouillard salin et en température.

Des échantillons préparés tel que décrit ci-dessous au paragraphe III et comprenant la composition liante 5 exemplifiée ci-dessus sont testés à différents stades du procédé selon l'invention :
1) Echantillon 1, traitement thermique 1 heure à 90°C, ce qui correspond à l'étape d'évaporation v).
2) Echantillon 2, 1 heure à 90°C puis 4 heures à 420°C ce qui correspond aux étapes v) et vi).
3) Echantillon 3, 1 heure à 90°C puis 4 heures à 420°C correspondant aux étapes v) et vi) suivies d'un compactage sous une pression de 4 tonnes pendant 1 minute.

L'analyse des échantillons 1-3 est réalisée avec un spectromètre de fluorescence X à dispersion de longueurs d'ondes MagiX de Philips.

Pour réaliser une analyse en Fluorescence X, les échantillons doivent être compactés soit purs soit avec un liant, et la masse totale de la pastille doit être de 200mg pour des pastilles de 13 mm de diamètre. Les 3 échantillons ont ainsi été préparés en mélangeant à chaque fois 100 mg de la composition liante exemplifiée à analyser à 100 mg d'acide borique. Chaque mélange a ensuite été compacté sous une pression de 4 tonnes pendant 1 minute afin d'obtenir des pastilles de 13 mm de diamètre. L'analyse de ces pastilles a été réalisée sous vide (5 Pascals).

Les résultats des analyses semi quantitatives sont indiqués dans le tableau 2 suivant. Ils sont exprimés en pourcentages massiques. La méthode permet de détecter les éléments allant du bore à l'uranium. Cependant étant donné que la présence d'acide borique ne permet pas un dosage de l'oxygène et vu la nature des échantillons (aspect métallique), les résultats sont présentés sans la valeur de l'oxygène. Du carbone a été détecté dans l'échantillon 1 mais aucun signal n'a été observé dans les deux autres échantillons 2 et 3.

La conversion de la composition liante pigmentée est proche de 100% car aucun carbone n'a été détecté dans les films après cuisson (étape v) en fluorescence X.

Si l'une des compositions liantes 1 à 4 avaient été testées, le tableau 2 ferait apparaître le phosphore et le métal issu dudit au moins un phosphate métallique, en particulier du zinc ou de l'aluminium, le ou lesquels s'ajouteraient aux particules métalliques.

**Tableau 2**

| | | | | |
|---|---|---|---|---|
| Echantillon 1 Concentrations | C | Al | Si | Zn |
| | 15,5 | 81,9 | 2,33 | 0,02 |
| Echantillon 2 Concentrations | | Al | Si | Zn |
| | - | 97,2 | 2,43 | 0,02 |
| Echantillon 3 Concentrations | | Al | Si | Zn |
| | - | 97,4 | 2,14 | 0,07 |

Avantageusement, la combinaison du procédé selon l'invention et de la composition liante selon l'invention permet de former un revêtement de protection sacrificielle contre la corrosion dans lequel le réseau est formé essentiellement de silice, de particules métalliques et d'au moins un phosphate métallique ayant des propriétés de résistance à la corrosion en température (supérieure ou égale à 400°C), au brouillard salin tel que défini dans la norme ISO 9227 en présence ou non d'une blessure qui sont doublées comparativement à un revêtement de protection sacrificielle exempte d'au moins un phosphate métallique.

## Revendications

1. Composition liante aqueuse pour la formation d'un revêtement de protection sacrificielle contre la corrosion, ladite composition étant exempte de chromates, et encore de préférence de borates et de molybdates, **caractérisée en ce que** ladite composition liante a un pH inférieur à 6 et comprend un liant, des particules d'au moins un oxyde métallique et au moins un phosphate métallique, ledit liant comprenant un oligomère d'organosilane hydrolysé, et **en ce que** la proportion en poids desdites particules d'au moins un oxyde métallique par rapport au poids total de la masse sèche de ladite composition liante est supérieure ou égale à 75%.

2. Composition liante selon la revendication 1, **caractérisée en ce que** ledit au moins un phosphate métallique est choisi dans le groupe constitué par le phosphate de zinc (Zn₃(PO₄)₂), le phosphate de manganèse (Mn₃(PO₄)₂), le phosphate d'aluminium (AlPO₄), le tripolyphosphate d'aluminium (Al₅(P₃O₁₀)₃), le phosphate d'aluminium et de zinc, et leurs mélanges, de préférence dans le groupe constitué par le phosphate de zinc et le tripolyphosphate d'aluminium.

3. Composition liante selon l'une ou l'autre des revendications 1 et 2, **caractérisée en ce que** ladite au moins une particule d'oxyde métallique est choisie dans le groupe constitué par l'oxyde d'aluminium, l'oxyde de zinc, l'oxyde d'un mélange zinc-magnésium, l'oxyde d'un mélange aluminium-zinc, et leurs mélanges, de préférence dans le groupe constitué par l'oxyde d'aluminium et l'oxyde du mélange aluminium-zinc.

4. Composition liante selon l'une quelconque des revendications 1 à 3, **caractérisée en ce que** la proportion en poids de particules d'au moins un oxyde métallique par rapport au poids total de la masse sèche de ladite composition liante est supérieure ou égale à 80%, de préférence supérieure ou égale à 85%.

5. Composition liante selon l'une quelconque des revendications 1 à 4 **caractérisée en ce que** ledit oligomère d'organosilane a la formule (I) suivante : [R₄-(SiR₁R₂R₃)]n dans laquelle n est un nombre entier avec 2 ≤ n ≤ 10 et R₄ est un groupe non hydrolysable et au moins un groupe parmi R₁, R₂ et R₃ est un groupe hydrolysable.

6. Composition liante selon la revendication 5, **caractérisée en ce que** R₄, et optionnellement R₁ et/ou R₂ et/ou R₃ lorsqu'il(s) représente(n)t un ou des groupe(s) non hydrolysable(s) représente(nt) indépendamment l'un de l'autre un groupe choisi parmi : un groupe alkyle en C1-C20 ou cycloalkyle en C3-C10 substitué par un ou plusieurs groupes epoxy(s), ledit groupe epoxy étant mono, di, tri ou tétravalent(s) ; un groupe glycidoxy ; un groupe alkyle en C1-C20 substitué par un groupe glycidoxy ; un groupe vinyle (CH₂=CH-) ; un groupe alkyle en C1-C20 substitué par un groupe vinyle (CH₂=CH-) ; un groupe alkyle en C1-C20 substitué par une amine primaire et/ou une amine secondaire et/ou une amine tertiaire ; une amine primaire ; une amine secondaire ; une amine tertiaire ; un groupe alkyle en C1-C20 substitué par un groupe thiol ; un groupe thiol ; un groupe urée ; un groupe alkyle en C1-C20 substitué par un groupe urée ; un groupe isocyanate ; un groupe alkyle en C1-C20 substitué par un groupe isocyanate et **en ce qu'**au moins un groupe parmi R₁, R₂, et R₃ représente en tant que groupe hydrolysable un groupe alcoxy en C1-C10 ; un groupe cycloalkyloxy en C3-C10; un groupe aryloxy en C5-C10 ou un groupe acyloxy en C1-C5.

7. Composition liante selon l'une ou l'autre des revendications 5 et 6, **caractérisée en ce que** le motif R₄-(SiR₁R₂R₃) de l'oligomère d'organosilane de formule I est choisi parmi une liste (IIa) : gamma-glycidoxypropyltriméthoxysilane ; gamma-glycidoxypropyltriéthoxysilane ; gamma-glycidoxypropyl methyldimethoxysilane ; gamma-glycidoxypropylmethyldiethoxysilane ; ou parmi une liste (IIb) : beta-(3,4-epoxycyclohexyl)-ethyl triméthoxysiloxane ; beta-(3,4-epoxycyclohexyl)-ethyl methyl dimethoxysilane, beta-(3,4-epoxycyclohexyl)-éthyl méthyl diéthoxysilane ; beta-(3,4-epoxycyclohexyl)-éthyl triéthoxysilane, de préférence parmi la liste (IIa).

8. Composition liante selon l'une quelconque des revendications 1 à 7 **caractérisée en ce que** l'oligomère d'organosilane hydrolysé représente entre 5% et 30% en poids du poids de la masse sèche de ladite composition liante, de préférence entre 5% et 15% en poids du poids de la masse sèche de ladite composition liante.

9. Composition liante selon l'une quelconque des revendications 1 à 8, **caractérisée en ce que** ladite composition liante comprend un catalyseur acide choisi dans le groupe constitué par l'acide p-toluène sulfonique, l'acide phosphorique, l'acide borique l'acide acétique et leurs mélanges, de préférence dans le groupe constitué par l'acide p-toluène sulfonique, l'acide acétique et l'acide phosphorique.

10. Kit pour composition liante selon l'une quelconque des revendications 1 à 9, **caractérisé en ce que** ledit kit comprend une partie A ayant un pH inférieur à 6 constituée par une composition aqueuse comprenant un oligomère d'organosilane hydrolysé et une partie B comprenant des particules d'au moins un oxyde métallique et au moins un phosphate métallique, la proportion en poids de particules d'au moins un oxyde métallique par rapport au poids total des masses sèches des parties A et B additionnées est supérieure ou égale à 75%.

11. Kit selon la revendication 10, **caractérisé en ce que** la partie A comprend un oligomère d'organosilane défini selon l'une quelconque des revendications 5 à 7, au moins un phosphate métallique défini selon la revendication 2, et des particules d'au moins un oxyde métallique définies selon la revendication 3.

12. Utilisation de la composition liante selon l'une quelconque des revendications 1 à 9 ou du kit selon l'une ou l'autre des revendications 10 et 11 pour former un revêtement de protection sacrificielle contre la corrosion sur au moins une portion de surface d'un support, en particulier un support en un matériau choisi parmi les métaux, les alliages de métaux, et les matériaux composites comprenant un métal ou un alliage de métal, de préférence ayant une résistivité électrique surfacique inférieure à 1 ohm/square.

13. Procédé de fabrication et d'application d'un revêtement de protection sacrificielle contre la corrosion sur au moins une portion de surface d'un support mettant en oeuvre la composition selon l'une quelconque des revendications 1 à 9, comprenant les étapes successives suivantes :
(i) Une étape de fourniture et de préparation d'au moins une portion de surface d'un support en métal ou en alliage de métal ;
(ii) une étape d'application de la composition liante selon l'une quelconque des revendications 1 à 9 de façon à former une couche de film humide sur au moins ladite portion de surface ;
(iii) une étape de séchage pour évaporer l'eau et permettre la formation d'un film à une température comprise entre 60°C et 90°C pendant au moins 5 minutes;
(iv) optionnellement, les étapes (ii) et (iii) sont répétées jusqu'à l'obtention d'un film ayant une épaisseur déterminée ;
(v) optionnellement, après chaque étape de séchage (iii) à l'exception de la dernière étape de séchage (iii), une étape de recuit intermédiaire et/ou une étape de compactage intermédiaire est/sont appliquée(s) audit film ;
(vi) une étape de recuit finale dudit film obtenu à l'issue de l'étape (iii) à une température supérieure ou égale à 250°C pendant au moins 30 minutes ;
(vii) une étape de compactage finale de ladite au moins une portion de surface revêtue dudit film de protection sacrificielle contre la corrosion en sorte de former un revêtement de protection sacrificielle contre la corrosion, de préférence ayant une résistivité électrique surfacique inférieure à 1 ohm / square.

14. Procédé de fabrication selon la revendication 13, **caractérisé en ce que** l'étape de préparation (i) comprend une étape de sablage de ladite au moins une portion de surface en sorte que ladite au moins une portion de surface présente une surface rugueuse, de préférence la rugosité est inférieure à 100µm, et supérieure à 1µm.

15. Support en un matériau choisi parmi les métaux, les alliages de métaux et les matériaux composites comprenant un métal ou un alliage de métal, de préférence en fer ou dans un alliage comprenant du fer, ayant au moins une portion de surface revêtue d'un revêtement de protection sacrificielle contre la corrosion obtenu par la mise en oeuvre du procédé selon l'une ou l'autre des revendications 13 et 14 et comprenant des particules métalliques, de la silice, et du phosphore, ledit revêtement comprenant moins de 10% en poids par rapport à son poids total, de préférence moins de 5% en poids par rapport à son poids total, d'un résidu hydrocarboné, et en ce que ledit revêtement est exempt de chromes, et encore de préférence de borates et de molybdates, et de préférence a une résistivité électrique surfacique inférieure à 1 ohm / square.
